**Europäisches Patentamt**

**European Patent Office**

**Office européen des brevets**

(11) Numéro de publication: **0 115 981**
**A1**

(12) # DEMANDE DE BREVET EUROPEEN

(21) Numéro de dépôt: **84400087.7**

(51) Int. Cl.³: **A 23 J 7/00**, A 23 J 7/02

(22) Date de dépôt: **17.01.84**

(30) Priorité: **01.02.83 FR 8301519**

(43) Date de publication de la demande: **15.08.84**
**Bulletin 84/33**

(84) Etats contractants désignés: **AT BE CH DE FR GB IT LI LU NL SE**

(71) Demandeur: **SYNTHELABO, 58, rue de la Glacière, F-75621 Paris Cedex 13 (FR)**

(72) Inventeur: **Bordat, Claude, 9, rue de la Roche, F-45680 Dordives (FR)**
Inventeur: **Baetz, Philippe, 158Bis, avenue de Suffren, F-75015 Paris (FR)**
Inventeur: **Barbe, Michel, Les Haies, F-45700 Conflans sur Loing (FR)**
Inventeur: **Wessely, Jean-Yves, 7, Avenue du Bel Air, F-92270 Bois Colombes (FR)**

(74) Mandataire: **Thouret-Lemaitre, Elisabeth et al, Service Brevets - SYNTHELABO 58, rue de la Glacière, F-75621 Paris Cedex 13 (FR)**

(54) **Procédé de fractionnement des phosphatides.**

(57) Procédé de fractionnement des phosphatides, procédé caractérisé en ce qu'on solubilise les fractions lipidiques à l'aide d'un solvant non polaire ou peu polaire, on perfuse la solution ainsi obtenue sur une résine qui fixe préférentiellement les dérivés phosphorés, on élimine les constituants autres que les phosphatides par élution à l'aide d'un solvant non polaire ou peu polaire et on élue les phosphatides par un solvant polaire ou un mélange de solvants polaires.

EP 0 115 981 A1

1

PROCEDE DE FRACTIONNEMENT DES PHOSPHATIDES. 0115981

La présente invention concerne un procédé de fractionnement des phosphatides.

L'émulsification d'huiles utilisées en alimentation, en dermatologie ou en cosmétologie utilise des agents émulsifiants synthétiques ou naturels. Il semble admis actuellement que seuls les émulsifiants naturels aient une bonne tolérance biologique lors d'utilisations humaines. Ces agents émulsifiants sont extraits par des procédés classiques à partir des fractions lipidiques, végétales (graines de soja, maïs...) ou animales (jaune d'oeuf par exemple).

A l'aide de ces procédés, on extrait des composés phosphorés : phosphatides [phosphatidylcholine (PC) ; phosphatidyléthanolamine (PE)...] associés à des glycolipides, des stérols et des lipides neutres.

Le but de l'invention est de séparer les phosphatides des glycolipides, des stérols et des lipides neutres ; de fractionner ces phosphatides et éventuellement de recombiner les fractions obtenues pour avoir un agent émulsifiant fonction du type d'émulsion souhaitée.

La séparation des phosphatides des stérols, lipides neutres et glycolipides est effectuée dans la littérature, selon plusieurs méthodes.

1 - La séparation au moyen d'extractions par l'acétone et l'éthanol donne toujours des mélanges de phosphatides et de glycolipides (R. Ajena and al. Fette - Seifen - Anstrichmittel N° 10, 643-651 (1971); W. Van Nieuwenhuyzen J. Amer. Oil Chemists' Soc. Vol. 53, 425-429 (1976)).

2 - La séparation au moyen d'adsorbant alumine, oxyde de magnésium conduit à un enrichissement systématique en phosphatidylcholine (brevet français Ajinomoto N° 79 27081).

3 - Le procédé de séparation par l'acide silicique utilisé en analytique, revient très cher et s'avère peu industrialisable (G. Rouser and al. J. Amer. Oil Chemists' Soc. Vol. 42 215-227 (1965) ; Techniques of Lipidology Lab. Techn. Biochem. Mol. Biol. (1972); J. Hirsch and al. J. Biol. Chem. 233, N° 2, 311-320 (1958).

Le procédé de l'invention consiste à solubiliser les fractions lipidiques (d'origine animale ou végétale) obtenues à partir de procédés classiques à l'aide d'un solvant non polaire ou peu polaire (acétate d'éthyle, chloroforme...) afin de perfuser cette solution sur résine (cationique faiblement acide, anionique faiblement basique, adsorbante non ionique ou peu ionique) qui fixe préférentiellement les dérivés phosphorés (phosphatides), et non les autres composants (glycolipides, stérols, lipides neutres).
Après fixation les phosphatides sont élués par un solvant ou un mélange de solvants, tous deux à caractère polaire (alcool par exemple).

Le procédé de l'invention permet donc d'obtenir les phosphatides après les avoir séparés des glycolipides, stérols et lipides neutres.

De plus, selon le procédé de l'invention, on obtient des fractions de phosphatides dans lesquelles le rapport PE/PC est variable.

Le procédé peut notamment s'appliquer au fractionnement des phosphatides de soja, de maïs, de jaune d'oeuf...

Exemple

On place 1 litre d'une résine Amberlite IRC 50 dans une colonne en verre. On la lave à l'eau puis à l'alcool et enfin

par l litre d'acétate d'éthyle. On dissout dans 400 ml d'acétate d'éthyle 5,15 g d'une fraction soluble dans l'alcool de lécithine de soja brute.

On perfuse la colonne avec cette solution puis avec 150 ml d'acétate d'éthyle.

L'éluat obtenu contient les glycolipides, stérols et lipides neutres.

Puis, on élue à l'alcool éthylique.

Les fractions de tête obtenues sont éliminées et on recueille 7 fractions :

    1. Fraction A :  5,8 g
    2. Fraction B :  6,6 g
    3. Fraction C :  5,8 g
    4. Fraction D :  5,6 g
    5. Fraction E :  4,4 g
    6. Fraction F :  3,0 g
    7. Fraction G :  3,7 g

La composition analytique de ces fractions est la suivante :

|  | A | B | C | D | E | F | G |
|---|---|---|---|---|---|---|---|
| Glycolipides | 19 | 5,7 | 2,3 | 2,7 | 0 | 0 | 0 |
| Phospholipides | 80 | 93,4 | 97,7 | 97,2 | 99,9 | 99,9 | 100 |
| Lipides neutres | 1 | 0,86 | 0 | 0 | 0 | 0 | 0 |
| Rapport PE/PC | 0,84 | 0,46 | 0,30 | 0,29 | 0,18 | 0,18 | 0,09 |

4

0115981

Les différentes fractions de phosphatides ainsi obtenues peuvent être utilisées seules ou recombinées comme émulsifiants pour l'émulsification d'huiles.

Les émulsions ainsi obtenues peuvent être utilisées en alimentation parentérale ou entérale, en cosmétologie, en dermatologie et pour l'élaboration des liposomes.

Deux exemples d'utilisation des fractions de phosphatides obtenues selon le procédé de l'invention pour l'émulsification de l'huile de soja sont donnés ci-dessous

Formule 1 : . huile de soja................... 20   g
. fraction E de phosphatides
de soja (obtenue selon l'ex.)     1,2 g
. glycérol........................ 2,25g
. eau distillée q.s.p............100  ml

Formule 2 : . huile de soja................... 20   g
. fractions D + E de phosphatides
de soja (obtenues selon l'ex.)   1,2 g
. glycerol........................ 2,25g
. eau distillée q.s.p........... 100  ml

Les huiles de soja ainsi émulsifiées peuvent servir en alimentation parentérale.

0115981

## Revendications

1. Procédé de fractionnement des phosphatides, procédé caractérisé en ce qu'on solubilise les fractions lipidiques à l'aide d'un solvant non polaire ou peu polaire, on perfuse la solution ainsi obtenue sur une résine qui fixe préférentiellement les dérivés phosphorés, on élimine les constituants autres que les phosphatides par élution à l'aide d'un solvant non polaire ou peu polaire et on élue les phosphatides par un solvant polaire ou un mélange de solvants polaires.

2. Procédé selon la revendication 1, caractérisé par le fait que la solubilisation des fractions lipidiques est réalisée à l'aide d'acétate d'éthyle ou de chloroforme.

3. Procédé selon la revendication 1 ou la revendication 2, caractérisé par le fait que la résine est une résine cationique faiblement acide, anionique faiblement basique, adsorbante non ionique ou peu ionique.

4. Procédé selon la revendication 1, 2, ou 3 caractérisé par le fait que l'on élimine les constituants autres que les phosphatides par un solvant tel que l'acétate d'éthyle.

5. Procédé selon la revendication 1, 2, 3 ou 4, caractérisé par le fait que l'on élue les phosphatides à l'aide d'alcool éthylique.

6. Fractions de phosphatides, seules ou combinaison, obtenues selon le procédé de l'une quelconque des revendications 1 à 5.

7. Application des fractions de phosphatides obtenues selon le procédé de l'une quelconque des revendications 1 à 5, seules ou en combinaison, comme agents émulsifiants pour l'émulsification d'huiles.

Office européen
des brevets

**RAPPORT DE RECHERCHE EUROPEENNE**

0115981

Numéro de la demande

EP 84 40 0087

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | FR-A-1 588 863 (A. NATTERMANN) <br> * R sum points 1,2; page 3, ligne 43; page 4, lignes 1-28; page 5, lignes 9-10, 32-37 * <br><br> --- | 1-7 | A 23 J 7/00 <br> A 23 J 7/02 |
| Y | US-A-3 798 246 (H. SHIMAZAKI et al.) <br> * Revendication 1; colonne 2, lignes 25-27 * <br><br> ----- | 7 | |
| | | | **DOMAINES TECHNIQUES RECHERCHES (Int. Cl. 3)** <br><br> A 23 J <br> C 07 F |

Le présent rapport de recherche a été établi pour toutes les revendications

| Lieu de la recherche | Date d'achèvement de la recherche | Examinateur |
|---|---|---|
| LA HAYE | 11-05-1984 | PEETERS J.C. |